# EUROPEAN PATENT APPLICATION

(11) **EP 4 769 558 A1**
(43) Date of publication of application: **01.07.2026**
(21) Application number: 25211378.2
(22) Date of filing: 27.10.2025
(51) Int. Cl.: H01M 4/38, H01M 4/133, H01M 4/134, H01M 4/36

(54) **NEGATIVE ELECTRODE ACTIVE MATERIAL, NEGATIVE ELECTRODE INCLUDING THE NEGATIVE ELECTRODE ACTIVE MATERIAL, AND RECHARGEABLE LITHIUM BATTERY INCLUDING THE NEGATIVE ELECTRODE ACTIVE MATERIAL**

(30) Priority: 30.12.2024 KR 20240200540
(71) Applicant: SAMSUNG SDI CO., LTD., Yongin-si, Gyeonggi-do 17084 (KR)
(72) Inventor: KIM, Jaemyung, Yongin-si (KR)
(74) Representative: Marks & Clerk LLP

(57) **Abstract**

A negative electrode active material comprising: a composite that includes a carbon-based material and silicon nanoparticles. The silicon nanoparticles have a pipe-shaped structure extending in one direction by a length. A wall portion of the silicon nanoparticles includes an inner wall forming a through hole having a diameter, and the wall portion has a thickness from the inner wall to an outer wall. Also disclosed is a negative electrode comprising a current collector having a negative electrode active material layer comprising the negative electrode active material on it. Further disclosed is a rechargeable lithium battery comprising the negative electrode and a positive electrode.

## Description

### BACKGROUND

The present invention relates to a negative electrode active material for a rechargeable lithium battery, a negative electrode comprising said negative electrode active material, and a rechargeable lithium battery comprising said negative electrode.

As a negative electrode active material of a rechargeable lithium battery, various carbon-based negative electrode active materials capable of lithium intercalation and deintercalation, such as artificial graphite, natural graphite, and hard carbon, are mainly used. However, such carbon-based negative electrode active materials are limited in that their capacity may be as low as about 360 mAh/g. Accordingly, there has been research into a silicon-based negative electrode active material having a high capacity. However, as compared to carbon-based negative electrode active materials such as graphite, silicon has a large volume change during charging and discharging, which results long-term life deterioration.

### SUMMARY

The present invention provides a silicon-based negative electrode active material with reduced volume change, which thereby exhibits excellent initial efficiency and improved long-term life characteristics.

The present invention provides a long-life rechargeable lithium battery including the negative electrode active material.

According to a first aspect of the present invention there is provided a negative electrode active material including: a composite including (i) a carbon-based material, and (ii) silicon nanoparticles. Each of the silicon nanoparticles has a pipe-shaped structure extending in a direction by a length, e.g. a first length. A wall portion of each of the silicon nanoparticles includes an inner wall defining or forming a through hole having a diameter, e.g. a first diameter, and the wall portion has a thickness, e.g. a first thickness, from the inner wall to an outer wall.

According to a second aspect of the present invention there is provided a negative electrode comprising: a current collector; and a negative electrode active material layer on the current collector. The negative electrode active material layer includes the aforementioned negative electrode active material of the first aspect of the invention.

According to a third aspect of the present invention there is provided a rechargeable lithium battery including the aforementioned negative electrode of the second aspect of the invention, and a positive electrode.

At least some of the above and other features of the invention are set out in the claims.

### BRIEF DESCRIPTION OF DRAWINGS

FIG. 1 is a simplified conceptual diagram of a rechargeable lithium battery according to embodiments of the present invention.
FIGS. 2 to 5 are diagrams of rechargeable lithium batteries according to embodiments of the present invention, in which FIG. 2 is a cylindrical battery, FIG. 3 is an angular battery, and FIGS. 4 and 5 are pouch-type batteries.
FIG. 6 is a cross-sectional view of a negative electrode according to an embodiment of the present invention.
FIG. 7 is a cross-sectional view of a negative electrode active material layer according to an embodiment of the present invention.
FIG. 8 schematically illustrates a negative electrode active material according to an embodiment of the present invention.
FIG. 9 illustrates a silicon nanoparticle according to an embodiment of the present invention.
FIG. 10 is a 20,000x magnification scanning electron microscope (SEM) image of a negative electrode active material according to an embodiment of the present invention.
FIG. 11 is a 5,000x magnification SEM image of a negative electrode active material according to an embodiment of the present invention.
FIG. 12 is a graph showing evaluation results of cycle-life characteristics of rechargeable lithium batteries according to Example 1 of the present invention and Comparative Example 1.

### DETAILED DESCRIPTION OF EMBODIMENTS

To fully understand the configuration and effects of the present disclosure, embodiments will be described with reference to the accompanying drawings. However, the present disclosure is not limited to the following embodiments and may be implemented in various forms. The embodiments are provided solely to illustrate the present disclosure and to enable those skilled in the art to fully understand its scope.

In this description, when an element is described as being "on" another element, it may be directly on the other element, or one or more intervening elements may be present. In the drawings, certain thicknesses may be exaggerated to better illustrate technical details. Throughout the specification, like reference numerals indicate like elements.

The embodiments described herein may be illustrated using sectional and/or plan views, which are presented as idealized examples of the present disclosure. The thicknesses of layers and regions in the drawings may be exaggerated for clarity. The regions shown in the drawings are for illustrative purposes and should not be construed as limiting the scope of the present disclosure. Although terms such as "first," "second," and "third" may be used to describe various elements, these terms are merely for distinction and do not imply any particular order or hierarchy. The embodiments described and illustrated herein include complementary variations.

The terms used in this description serve only to explain various embodiments and are not intended to limit the present disclosure. Unless explicitly stated otherwise, singular forms may also include plural forms. The terms "comprises/includes" and "comprising/including" do not exclude the presence or addition of one or more other components.

Unless otherwise specifically defined, the term "particle diameter" refers to an average particle diameter. The particle diameter may represent the median particle size (D50), which corresponds to the diameter of particles at 50 vol% in a cumulative particle size distribution. The average particle diameter (D50) can be measured using widely known methods, such as a particle size analyzer, transmission electron microscope (TEM) imaging, or scanning electron microscope (SEM) imaging. Alternatively, dynamic light scattering may be used, where particle counts within size ranges are analyzed to calculate the average particle diameter (D50). Additionally, a laser scattering method may be employed, in which a target particle is dispersed in a solvent, introduced into a laser scattering particle measurement device (e.g., MT3000 from Microtrac, Inc.), irradiated with ultrasonic waves at 28 kHz and 60 W, and subsequently analyzed to determine the D50 value based on a 50% cumulative particle size distribution.

In this description, the term "metal" may include both metal and metalloid, such as silicon and germanium, in elemental or ionic states.

In this description, the term "alloy" may refer to a mixture of two or more metals.

In this description, the term "electrode active material" may refer to an electrode material that is capable of undergoing lithiation and delithiation.

In this description, the term "positive electrode active material" may refer to a positive electrode material that is capable of undergoing lithiation and delithiation.

In this description, the term "negative electrode active material" may refer to a negative electrode material that is capable of undergoing lithiation and delithiation.

In this description, the term "lithiation" and "lithiate" may refer to a process of adding lithium to an electrode active material.

In this description, the term "delithiation" and "delithiate" may refer to a process of removing lithium from an electrode active material.

In this description, the term "charging" and "charge" may refer to a process of providing electrochemical energy to a cell.

In this description, the term "discharging" and "discharge" may refer to a process of removing electrochemical energy from a cell.

In this description, the term "positive electrode" and "cathode" may refer to an electrode where electrochemical reduction and lithiation occurs during the discharge process.

In this description, the term "negative electrode" and "anode" may refer to an electrode where electrochemical oxidation and delithiation occurs during the discharge process.

### Rechargeable Lithium Battery 100

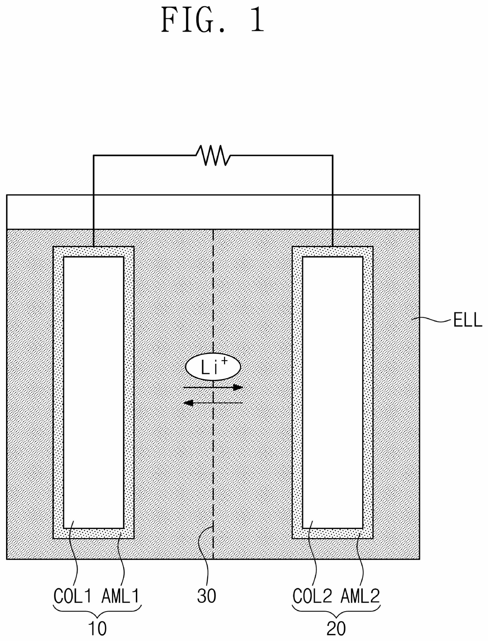

FIG. 1 is a simplified conceptual diagram illustrating a rechargeable lithium battery according to embodiments of the present disclosure. Referring to FIG. 1, the rechargeable lithium battery may include a positive electrode 10, a negative electrode 20, a separator 30, and an electrolyte ELL.

Referring to FIG. 1, the rechargeable lithium battery may include a positive electrode 10, a negative electrode 20, a separator 30, and an electrolyte ELL.

The positive electrode 10 and the negative electrode 20 may be spaced apart from each other by the separator 30. That is, the separator 30 may be disposed between the positive electrode 10 and the negative electrode 20. The positive electrode 10, the negative electrode 20 and the separator 30 may be in contact with the electrolyte ELL such that the positive electrode 10, the negative electrode 20 and the separator 30 are impregnated with the electrolyte ELL.

The electrolyte ELL may be a medium for transferring lithium ions between the positive electrode 10 and the negative electrode 20. In the electrolyte ELL, the lithium ions may move through the separator 30 toward the positive electrode 10 or the negative electrode 20.

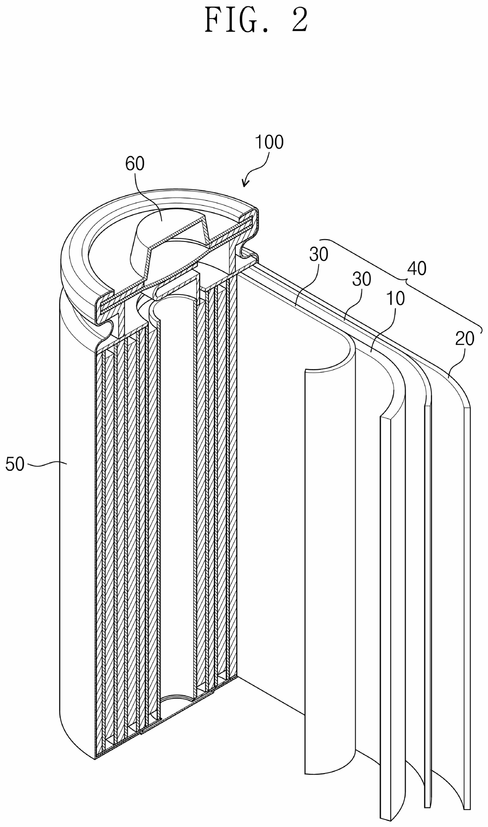

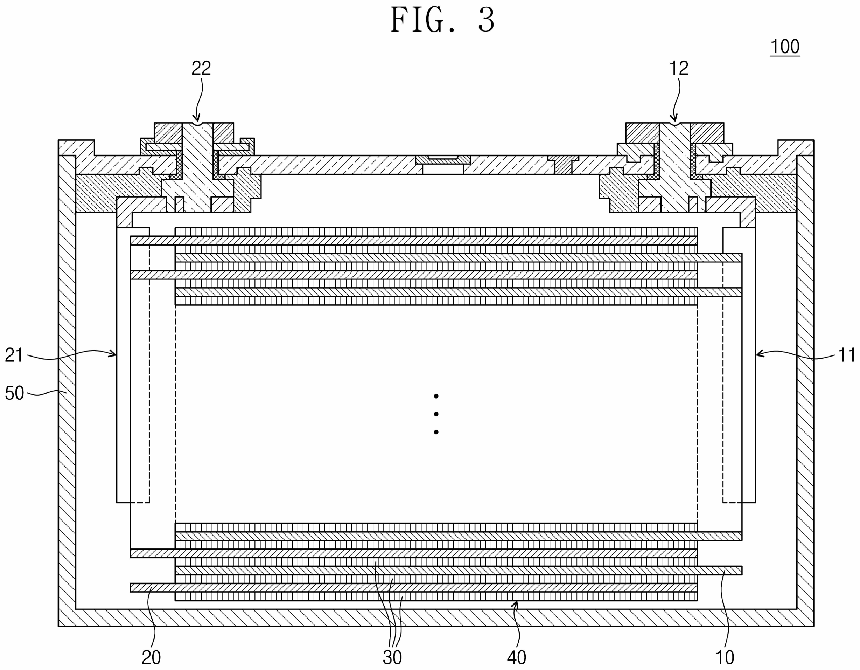

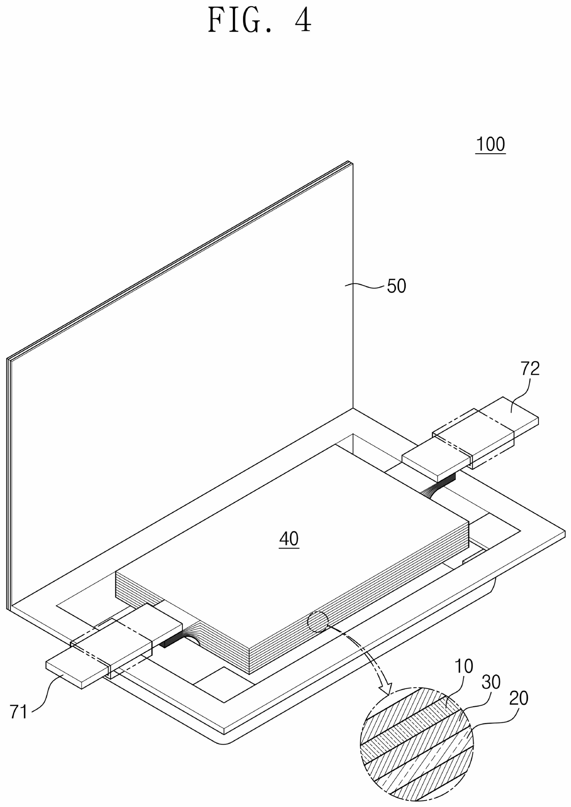

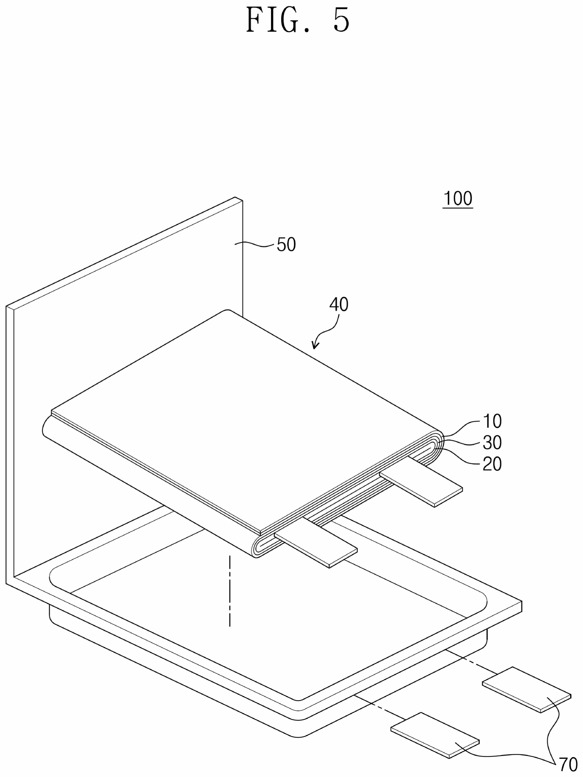

Based on a shape of the rechargeable lithium battery, the rechargeable lithium battery may be classified as cylindrical, prismatic, pouch, or coin type. FIGS. 2 to 5 illustrate simplified diagrams showing rechargeable lithium batteries according to embodiments of the present disclosure, with FIG. 2 showing a cylindrical battery, FIG. 3 showing a prismatic battery, and FIGS. 4 and 5 showing pouch-type batteries. Referring to FIGS. 2 to 4, the rechargeable lithium battery 100 may include an electrode assembly 40 in which a separator 30 is interposed between a positive electrode 10 and a negative electrode 20. The rechargeable lithium battery 100 may also include a casing 50 in which the electrode assembly 40 is accommodated. The positive electrode 10, the negative electrode 20, and the separator 30 may be impregnated in an electrolyte (not shown). As illustrated in FIG. 2, the rechargeable lithium battery 100 may include a sealing member 60 that seals the casing 50. In addition, as illustrated in FIG. 3, the rechargeable lithium battery 100 may include a positive electrode lead tab 11, a positive electrode terminal 12, a negative electrode lead tab 21, and a negative electrode terminal 22. As shown in FIGS. 4 and 5, the rechargeable lithium battery 100 may include an electrode tab 70, or a positive electrode tab 71 and a negative electrode tab 72, with electrode tab 70 forming an electrical path for externally inducing a current generated in the electrode assembly 40.

### Positive Electrode 10

The positive electrode 10 according to the embodiments of the present disclosure may include a positive electrode current collector COL1 and a positive electrode active material layer AML1 on the positive electrode current collector COL1. The positive electrode current collector COL1 may provide a reference surface on which the positive electrode active material layer AML1 is disposed. As for the positive electrode current collector COL1, the content of the negative electrode current collector described below may be applied in the same manner.

The positive electrode active material layer AML1 may include a positive electrode active material. The positive electrode active material layer AML1 may further include a binder and/or a conductive material.

The positive electrode active material in the positive electrode active material layer AML1 may include a compound that is capable of reversibly intercalating and deintercalating lithium ions. For example, the positive electrode active material may include an oxide-based positive electrode active material, a sulfide-based negative electrode active material, or a combination thereof.

The oxide-based positive electrode active material may include, for example, a lithium transition metal oxide, a metal oxide, or a combination thereof. The lithium transition metal oxide may include, for example, lithium cobalt oxide, lithium nickel oxide, lithium nickel cobalt oxide, lithium nickel cobalt aluminium oxide, lithium nickel cobalt manganese oxide, lithium manganate, lithium iron phosphate, or a combination thereof. The lithium oxide may include, for example, iron oxide, vanadium oxide, or a combination thereof.

As the oxide-based positive electrode active material may include, for example, one or more kinds of composite oxide of lithium and a metal selected from cobalt, manganese, nickel, and a combination thereof. For example, the lithium-containing oxide-based positive electrode active material may include LiₐA_{1-b}B'_{b}D₂ (where 0.90≤a≤1, and 0≤b≤0.5); LiₐE_{1-b}B'_{b}O_{2-c}D_{c} (where 0.90≤a≤1, 0≤b≤0.5, and 0≤c≤0.05); LiE_{2-b}B'_{b}O_{4-c}D_{c} (where 0≤b≤0.5, and 0≤c≤0.05); LiₐNi_{1-b-c}Co_{b}B'_{c}D_{α} (where 0.90≤a≤1, 0≤ b≤0.5, 0≤c≤0.05, and 0<α≤2); LiₐNi_{1-b-c}B'_{c}O_{2-α}F'_{α} (where 0.90≤a≤1, 0≤b≤0.5, 0≤c≤0.05, and 0<α<2); LiₐNi_{1-b-c}Mn_{b}B'_{c}D_{α} (where 0.90≤a≤1, 0≤b≤0.5, 0≤c≤0.05, 0<α≤2); LiₐNi_{1-b-c}Mn_{b}B'_{c}O_{2-α}F'_{α} (where 0.90≤a≤1, 0≤b≤0.5, 0≤c≤0.05, and 0<α<2); and LiₐNi_{b}E_{c}G_{d}O₂ (where 0.90≤a≤1, 0≤b≤0.9, 0≤c≤0.5, and 0.001≤d≤0.1); LiₐNi_{b}Co_{c}Mn_{d}GₑO₂ (where 0.90≤a≤1, 0≤b≤0.9, 0≤c≤0.5, 0≤d≤0.5, 0.001≤e≤0.1); LiₐNiG_{b}O₂ (where 0.90≤a≤1, 0.001≤b≤0.1); LiₐCoG_{b}O₂ (where 0.90≤a≤1, 0.001≤b≤0.1); LiₐMnG_{b}O₂ (where 0.90≤a≤1, 0.001≤b≤0.1); LiₐMn₂G_{b}O₄ (where 0.90≤a≤1, 0.001≤b≤0.1); LiV₂O₅; LiI'O₂; LiNiVO₄; Li_{(3-f)}J₂(PO₄)₃ (0≤f≤2); Li_{(3- f)}Fe₂(PO₄)₃ (0≤f≤2); LiFePO₄. In formulas, A may be Ni, Co, Mn, or a combination thereof; B' may be Al, Ni, Co, Mn, Cr, Fe, Mg, Sr, V, a rare earth element, or a combination thereof; D may be O, F, S, P, or a combination of thereof; E may be Co, Mn, and a combination thereof; F' may be F, S, P, or a combination thereof; G may be Al, Cr, Mn, Fe, Mg, La, Ce, Sr, V, or a combination of thereof; I' may be Cr, V, Fe, Sc, Y, or a combination thereof; and J may be V, Cr, Mn, or a combination thereof.

The oxide-based positive electrode active material may include, for example, a lithium salt of a transition metal oxide having a layered rock salt type structure among the above-described lithium transition metal oxides. The term "layered rock salt type structure" may refer to a structure in which an oxygen atom layer and a metal atom layer are alternately and regularly arranged in a <111> direction of a cubic rock salt type structure, where each atom layer forms a two-dimensional plane. The term "cubic rock salt type structure" may refer to a sodium chloride (NaCl) type structure, which is a type of crystal structure, and for example has a structure in which face centered cubic lattices (FCCs) each formed of cations and anions are arranged displaced from each other by 1/2 of a ridge of a unit lattice. The lithium transition metal oxide having such the layered rock salt type structure may be, for example, a ternary lithium transition metal oxide such as LiNiₓCo_{y}Al_{z}O₂ (NCA) or LiNiₓCo_{y}Mn_{z}O₂ (NCM) (where 0<x<1, 0<y<1, 0<z<1, and x+y+z=1). When the positive electrode active material includes a ternary lithium transition metal oxide having the layered rock salt type structure, the rechargeable lithium battery 100 may have increased energy density and improved thermal stability.

The oxide-based positive electrode active material may be covered with a coating layer. The oxide-based positive electrode active material may be used in a mixture of the above-described compound(s) and a compound to which the coating layer is added. The coating layer added to a surface of the positive electrode active material may include, for example, an oxide, a hydroxide, an oxyhydroxide, an oxycarbonate, or a hydroxycarbonate of coating elements described below. The compound that constitutes the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may include, for example, Li₂O-ZrO₂ (LZO). A method for forming the coating layer may be any method that does not adversely affect the physical properties of the positive electrode active material. The method for forming the coating layer may include, for example, spray coating or immersion.

When the oxide-based positive electrode active material includes nickel (Ni) as a ternary lithium transition metal oxide such as NCA or NCM, a capacity density of the rechargeable lithium battery 100 may increase to reduce metal elution from the positive electrode active material in a charged state. Therefore, the rechargeable lithium battery 100 may improve in cycle characteristics in a charged state. The term "cycle characteristics" may refer to characteristics that indicate a degree to which the rechargeable lithium battery 100 is degraded due to charging and discharging. For example, the rechargeable lithium battery 100 with a high cycle characteristics may degrade less due to charging and discharging, while the rechargeable lithium battery 100 with a low cycle characteristics may degrade more due to charging and discharging.

The oxide-based positive electrode active material may have, for example, a particle shape such as a sphere or an ellipse. There is no limitation on a particle size and an amount of the oxide-based positive electrode active material. The size of the oxide-based positive electrode active material may be, for example, about 0.1 µm to about 30 µm, about 0.5 µm to about 20 µm, or about 1 µm to about 15 µm. The oxide-based positive electrode active material may be, for example, single crystal particle or polycrystalline particle.

In the positive electrode active material layer AML1, an amount of a positive electrode active material may be about 90 wt% to about 99 wt% relative to the total weight of the positive electrode active material layer AML1. The positive electrode active material layer AML1 may further include a binder and a conductive material. An amount of the binder and the conductive material may each be about 1 wt% to about 5 wt% relative to the total weight of the positive electrode active material layer AML1.

The binder improve binding of positive electrode active material particles to each other and also to improve binding of the positive electrode active material to the positive electrode current collector COL1. The binder may include, for example, polyvinyl alcohol, carboxymethyl cellulose, hydroxypropyl cellulose, diacetyl cellulose, polyvinyl chloride, carboxylated polyvinylchloride, polyvinylfluoride, polymers including ethylene oxide, polyvinylpyrrolidone, polyurethane, polytetrafluoroethylene, polyvinylidene fluoride, polyethylene, polypropylene, styrene-butadiene rubber, acrylate styrene-butadiene rubber, epoxy resin, nylon, or a combination thereof. But the present disclosure is not limited to these examples.

The conductive material may be used to provide an electrode with conductivity, and any suitable conductive material that does not cause a chemical change in the battery may be used as the conductive material. The conductive material may include, for example, a carbon-based material such as natural graphite, artificial graphite, carbon black, acetylene black, Ketjen black, carbon fiber, carbon nanofiber, and carbon nanotube; a metal-based material including copper, nickel, aluminium, silver, or the like, and in a form of metal powder or metal fiber; a conductive polymer such as a polyphenylene derivative; or a mixture thereof.

As the positive electrode current collector COL1, an aluminium foil, a nickel foil, or a combination thereof, may be used. But such foils are merely illustrative and the present disclosure is not limited thereto.

### Negative Electrode 20

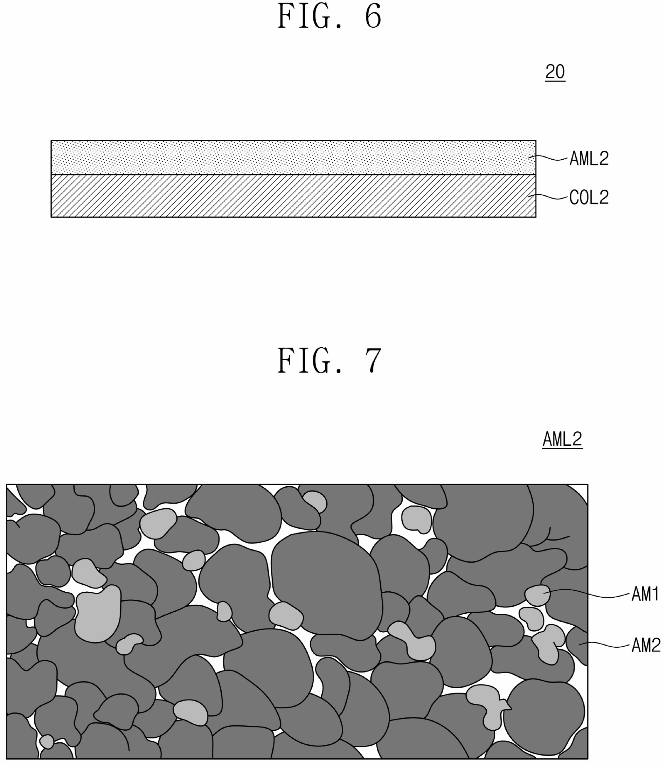

FIG. 6 is a cross-sectional view illustrating a negative electrode 20 according to embodiments of the invention. Referring to FIG. 6, the negative electrode 20 includes a negative electrode current collector COL2 and a negative electrode active material layer AML2 on the negative electrode current collector COL2. The negative electrode current collector COL2 provides a reference surface on which the negative electrode active material layer AML2 is disposed. The negative electrode current collector COL2 may include, for example, a material that does not react with lithium, that is, a material that does not form both an alloy and/or a compound with lithium. For example, the negative electrode current collector COL2 may include at least one of copper (Cu), stainless steel, titanium (Ti), iron (Fe), cobalt (Co), and nickel (Ni), or a combination thereof. A thickness of the negative electrode current collector COL2 may be about 1 µm to about 20 µm, about 5 µm to about 15 µm, or about 7 µm to about 10 µm.

The negative electrode current collector COL2 may be composed of one of the above-described metals or may include an alloy or a coating material of two or more metals. The negative electrode current collector COL2 may have, for example, a plate-shape, or a foil-shape. In an embodiment, the negative electrode current collector COL2 may be omitted.

Although not shown, the negative electrode current collector COL2 according to an embodiment may include a base film and a metal layer disposed on one surface or both surfaces of the base film. The base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or a combination thereof. The polymer may be an insulating polymer. Since the base film includes an insulating thermoplastic polymer, the base film may be softened or liquefied in an event of a short circuit, thereby interrupting battery operation and suppressing a rapid increase in current. The metal layer may include, for example, copper (Cu), stainless steel, titanium (Ti), iron (Fe), cobalt (Co), nickel (Ni), or an alloy thereof. The negative electrode current collector COL2 may further include a metal piece and/or a lead tab. The negative electrode current collector COL2 having such a structure may reduce a weight of the negative electrode 20 and thereby improve the energy density of the rechargeable lithium battery 100.

The negative electrode active material layer AML2 includes a negative electrode active material and may further include a binder and/or a conductive material. For example, the negative electrode active material layer AML2 may include about 90 wt% to about 99 wt% of the negative electrode active material, about 0.5 wt% to about 5 wt% of the binder, and about 0 wt% to about 5 wt% of the conductive material.

The binder may serve to improve binding of the negative electrode active material particles to each other and also to improve binding of the negative active material to the negative electrode current collector COL2. The binder may include at least one of a non-aqueous binder, an aqueous binder, a dry binder, or a combination thereof.

The non-aqueous binder may include polyvinyl chloride, carboxylated polyvinyl chlorides, polyvinyl fluoride, ethylene-propylene copolymers, polystyrene, polyurethane, polytetrafluoroethylene, polyvinylidene fluoride, polyethylene, polypropylene, polyamide imide, polyimide, and a combination thereof.

The aqueous binder may include styrene-butadiene rubber, (meth)acrylated styrene-butadiene rubber, a (meth)acrylonitrile-butadiene rubber, (meth) acrylic rubber, butyl rubber, fluoro rubber, polyethylene oxide, polyvinylpyrrolidone, polyepichlorohydrin, polyphosphazene, poly (meth)acrylonitrile, ethylene-propylene-diene copolymer, polyvinylpyridine, chlorosulfonated polyethylene, latex, polyester resin, (meth)acrylic resin, phenolic resin, epoxy resin, polyvinyl alcohol, or a combination thereof.

When an aqueous binder is used as the negative electrode binder, a cellulose-based compound capable of providing viscosity may be further included. The cellulose-based compound may include carboxymethyl cellulose, hydroxypropylmethyl cellulose, methyl cellulose, or alkali metal salts thereof. The alkali metal may include Na, K, Li, or a combination thereof.

The dry binder may be a polymeric material that is capable of being fibrous. For example, the dry binder may include polytetrafluoroethylene, polyvinylidene fluoride, polyvinylidene fluoride-hexafluoropropylene copolymer, polyethylene oxide, or a combination thereof.

The conductive material may be used to provide an electrode with conductivity, and any suitable conductive material that does not cause a chemical change in the battery may be used as the conductive material. For example, the conductive material may include a carbon-based material such as natural graphite, artificial graphite, carbon black, acetylene black, Ketjen black, carbon fiber, carbon nanofiber, and carbon nanotube; a metal-based material including copper, nickel, aluminium, silver, or the like, and in a form of metal powder or metal fiber; a conductive polymer such as a polyphenylene derivative; and a mixture thereof.

### Negative Electrode Active Material

The negative electrode active material in the negative electrode active material layer AML2 includes a material that reversibly intercalates and deintercalates lithium ions and a material capable of doping and de-doping lithium, and may also include one or more of lithium metal, a lithium metal alloy, or a transition metal oxide.

The material that reversibly intercalates and deintercalates lithium ions includes a carbon-based negative electrode active material, such as crystalline carbon, amorphous carbon, or a combination thereof. The crystalline carbon may include graphite such as non-shaped, plate-shaped, flake-shaped, sphere-shaped, or fiber-shaped natural graphite or artificial graphite. The amorphous carbon may include soft carbon, hard carbon, mesophase pitch carbide, calcined coke, or a combination thereof.

The lithium metal alloy may include an alloy of lithium and metal selected from Na, K, Rb, Cs, Fr, Be, Mg, Ca, Sr, Si, Sb, Pb, In, Zn, Ba, Ra, Ge, Al, and Sn.

The material capable of doping and de-doping lithium includes a Si-based negative electrode active material or a Sn-based negative electrode active material. The Si-based negative electrode active material may include silicon, silicon-carbon composite, SiOₓ (0<x≤2), a Si-Q alloy, or a combination thereof. In the formula Si-Q, Q is an alkali metal, an alkaline earth metal, a Group 13 element, a Group 14 element (except for Si), a Group 15 element, a Group 16 element, a transition metal, a rare earth element, and a combination thereof. The Sn-based negative electrode active material may include Sn, SnO₂, a Sn-based alloy, or a combination thereof.

The silicon-carbon composite may be a composite of silicon and amorphous carbon. According to an embodiment, the silicon-carbon composite may have a structure in which the amorphous carbon is coated on a surface of the silicon particles. For example, the silicon-carbon composite may include secondary particles (core) in which primary silicon particles are assembled, and an amorphous carbon coating layer (shell) on surfaces of the secondary particles. The amorphous carbon may also be between the silicon primary particles, for example, the primary silicon particles may be coated with amorphous carbon. The secondary particles may be present dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material.

FIG. 7 is an enlarged cross-sectional view of the negative electrode active material layer AML2 in FIG. 6. As illustrated in FIG. 7, the negative electrode active material layer AML2 may include a first negative electrode active material AM1 and a second negative electrode active material AM2 that are different from each other. Complementary effects may be achieved by mixing negative electrode active materials with different characteristics, thereby optimizing the battery performance. For example, a Si-based negative electrode active material or a Sn-based positive electrode active material may be used in combination with the carbon-based negative electrode active material. The Si-based negative electrode active material with high capacity may be mixed with the structurally stable carbon-based material to provide the negative electrode having high capacity and long lifespan.

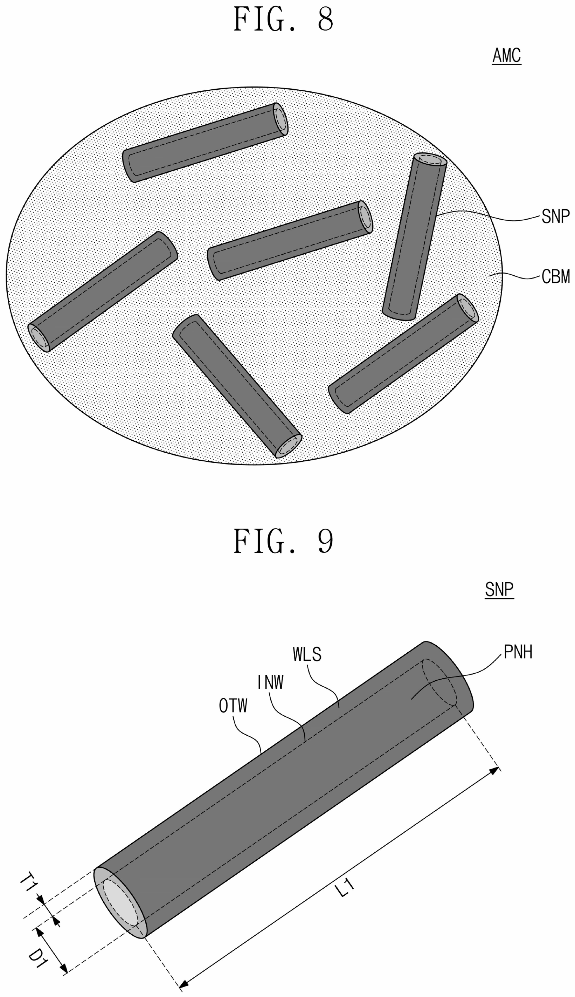

Hereinafter, the negative electrode active material according to embodiments of the present disclosure will be specifically described. For convenience, Si-based negative electrode active material according to the embodiment of the present disclosure is referred to as a first negative electrode active material AM1. Referring to FIG. 8, the first negative electrode active material AM1 includes a composite AMC of a carbon-based material CBM and silicon nanoparticles SNP. That is, the first negative electrode active material AM1 is a composite AMC including silicon nanoparticles SNP. It may be possible to improve the capacity of the negative electrode by including silicon nanoparticles.

The composite AMC may include a matrix composed of a carbon-based material CBM, with silicon nanoparticles SNP provided inside the matrix. Specifically, the carbon-based material CBM may be configured to surround the outsides of the silicon nanoparticles SNP. In a configuration with the carbon-based material CBM surrounding the silicon nanoparticles SNP, the expansion of the silicon nanoparticles SNP may be buffered. The matrix composed of the carbon-based material CBM may maintain the structural stability of the negative electrode active material particles and allow the individual components to be uniformly distributed. As a result, the negative electrode active material may maintain structural stability even with external stress or volume change, and electric conductivity may be improved. Further, the silicon nanoparticles SNP surrounded by the carbon-based material CBM may not be substantially exposed to outside of the carbon-based material CBM. Thus, the silicon nanoparticles SNP may be prevented from being in direct contact with the electrolyte, which thereby suppresses side reactions.

In an embodiment, the composite AMC may include an aggregate of a plurality of silicon nanoparticles SNP and a carbon-based material CBM configured to envelop the aggregate. The carbon-based material CBM may be present in a form of a coating layer which coats an outer surface of the aggregate. In addition, the carbon-based material CBM may fill the voids inside the silicon aggregate. That is, the carbon-based material CBM may fill the inside of the aggregate of the silicon nanoparticles SNP and cover the outside of the aggregate.

An amount of the carbon-based material CBM may be about 20 wt% to about 80 wt%, about 30 wt% to about 70 wt%, or about 50 wt% to 80 wt% relative to a total weight of the composite AMC. An amount of the silicon nanoparticles SNP may be about 20 wt% to about 80 wt%, about 30 wt% to about 70 wt%, or about 20 wt% to about 50 wt% relative to the total weight of the composite AMC. When the carbon-based material CBM and the silicon nanoparticle SNP are included in the composite AMC within these ranges, a higher capacity, particularly a higher capacity compared to a crystalline carbon negative electrode active material, may be achieved, particularly compared to a crystalline carbon negative electrode active material. And the composite AMC is a physically stable.

The carbon-based material CBM may include amorphous carbon. The amorphous carbon may include, for example, soft carbon, hard carbon, mesophase pitch carbide, calcined coke, or a combination thereof. For example, the amorphous carbon in the composite AMC may be present in a form of coating the surfaces of the silicon nanoparticles SNP, and may be included in a form of filling between a plurality of the silicon nanoparticles SNP. However, amorphous carbon is not limited thereto, and any suitable material that forms a composite with the silicon nanoparticles SNP may be used.

In another embodiment, the carbon-based material CBM may further include crystalline carbon. When the composite includes crystalline carbon, the electrical conductivity of the composite may be improved. It may be possible to improve the structural stability of the composite during charging and discharging by enabling regular insertion and desorption of lithium ions.

FIG. 9 shows the silicon nanoparticles SNP in more detail. The negative electrode active material includes pipe-shaped (e.g. having a hollow cylindrical shape) silicon nanoparticles SNP. The silicon nanoparticles SNP have a structure extending in one direction by a first length L1. In an embodiment, the first length L1 may be about 0.5 µm to about 200 µm. A size of the pipe-shaped silicon nanoparticles SNP in the present disclosure may be defined as the first length L1.

The silicon nanoparticles SNP include a wall portion WLS, and the wall portion WLS includes an inner wall INW and an outer wall OTW. The wall portion WLS has a first thickness T1 from the inner wall to the outer wall. In an embodiment, the first thickness T1 may be about 1 nm to about 100 nm.

The inner wall INW defines a through hole PNH (e.g. an elongate, cylindrical through hole) having a first diameter D1. That is, the silicon nanoparticles SNP include an internal through hole PNH, and the inner wall INW forms a shape of the through hole PNH. As a result, the through hole PNH is present inside the structure and may be referred to as a void that extends in one direction with a first diameter D1.

As described above, the composite AMC may be configured to buffer volume change by including pipe-shaped silicon nanoparticles SNP that include internal voids. However, the pipe-shaped silicon nanoparticle SNP shown in FIG. 9 is merely one embodiment, and the present disclosure is not limited thereto. Any structure that has the same problem-solving principle, such as buffering volume change by including the through hole PNH inside, is within scope of the present disclosure. In the present disclosure, the term "pipe-shaped structure" is merely intended to indicate a structure according to an embodiment of the present disclosure. Other embodiments of the present disclosure include structures in which the through hole PNH or the outer wall OTW do not extend in a straight line.

In addition to forming the composite by enveloping the silicon nanoparticles SNP with the carbon-based material CBM, the structural characteristics of the silicon nanoparticles SNP themselves may be utilized. That is the structural characteristics may allow the volume change to be buffered, thereby improving the stability of the negative electrode active material. Therefore, it may be possible to prevent deformation of the negative electrode active material due to an external pressure or the volume change during charging and discharging. Since the volume change of silicon can be better suppressed, an amount of silicon in the composite AMC may be increased. And as a result, the capacity of the negative electrode may be increased.

Because the silicon nanoparticles SNP in the composite AMC have structures extending in one direction, the silicon nanoparticles may contribute to the structural stability of the composite AMC. For example, the silicon nanoparticles SNP may be disposed in a fibrous form in a carbon-based matrix. As such, the silicon nanoparticles SNP may suppress cracks that occur during drying and rolling of the negative electrode active material composite AMC. In addition, it may be possible to improve compressive strength and durability by arranging the silicon nanoparticles SNP in the form of fibers and uniformly distributing the particles inside the composite AMC. As a result, long-term stability of the negative electrode may be provided.

Referring to the structure of the silicon nanoparticles SNP described above, the silicon nanoparticles SNP include a through hole PNH having the first diameter D1. The first diameter D1 may be about 1 nm to about 100 nm. When the silicon nanoparticles SNP have a relatively small diameter, e.g. falling within this range, the silicon nanoparticles SNP may have liquid impermeability. As such, the through hole PNH inside the silicon nanoparticles SNP may have gas permeability and barrier properties against liquid. Thus, even when the negative electrode of the rechargeable lithium battery is impregnated with the electrolyte, the through holes PNH of the silicon nanoparticles SNP may not be soaked with the electrolyte. Accordingly, voids that can absorb a volume change of the silicon nanoparticles SNP may be maintained during the operation of the rechargeable lithium battery. In addition, it may be possible to prevent the silicon from directly contacting the electrolyte through the through hole PNH, thereby suppressing side reactions. As a result, a long-life Si-based negative electrode active material having improved chemical stability may be provided.

In an embodiment, the first length L1 of the silicon nanoparticles SNP may be about 0.5 µm to about 200 µm. The first thickness T1 of the silicon nanoparticles SNP may be about 1 nm to about 100 nm. In addition, a ratio of the first diameter D1 to the first thickness T1 of the silicon nanoparticles SNP may be about 1 to about 100. A ratio of the first length L1 to the first diameter D1 of the silicon nanoparticles SNP may be about 5 to about 5000. When the silicon nanoparticles SNP satisfies these ranges, the silicon nanoparticles SNP may maintain a more stable structure within the composite AMC.

In an embodiment, an average particle diameter of the first negative electrode active material AM1 may be about 2 µm to about 15 µm, about 2 µm to about 8 µm, or about 4 µm to about 10 µm.

The first negative electrode active material AM1 according to an embodiment may be manufactured as follows. First, silicon particles may be prepared. The silicon nanoparticles SNP may be nano-sized particles. Silicon nanoparticles SNP may be obtained by etching a silicon precursor extracted from kaolin (main component: Aluminosilicate clay, Al₂Si₂O₅(OH)₄) with a strong acid.

The pipe-shaped silicon nanoparticles including the through hole inside may be manufactured through a process of etching a halloysite mineral with hydrochloric acid (HCl). The length and thickness of the silicon nanoparticle and the diameter of the through hole may be adjusted by controlling a concentration of an etching solution and etching time.

The manufactured silicon particles may be dispersed in a solvent to form a silicon particle dispersion. The solvent may include, for example, isopropyl alcohol, ethanol, methanol, butanol, or a combination thereof, and any alcohol-based solvent that does not oxidize silicon particles and is easily volatilized may be suitably used. A concentration of the silicon particle dispersion may be about 10 wt% to about 30 wt%.

The prepared silicon particle dispersion may be subjected to spray drying. At this time, the nano-sized silicon particles may be assembled to form a micro-sized silicon particle aggregate. Specifically, the silicon particle aggregate may have a structure in which the pipe-shaped silicon nanoparticles are entangled with each other. The silicon particle aggregate may also have spaced intervals between individual particles.

The spray drying process may adjust a sphericity of the negative electrode active material by the nozzle used in the process and the atmosphere in which the process is conducted. For example, a two-fluid nozzle may be used to form fine particles by mixing two-fluids of liquid and gas with the nozzle. That is, when the two-fluid nozzle is used, fine, and spherical particles may be formed. Since the particles are small, an additional pulverization process may not be required. Thus, the spherical shape of the particles can be maintained. If a disk-shaped nozzle were to be used in which the nozzle is sprayed while aa body rotates, large particles may be formed and an additional pulverization process may be required to account for the larger particle size. In addition, various types of particles such as sphere, ellipse, and donut are formed, which are not appropriate.

The spray drying process may be performed under an N₂ atmosphere. For example, the process may be performed while providing N₂ at a flow rate of about 40 L/min to about 50 L/min, or a flow rate of about 30 L/min to about 40 L/min. When the flow rate of N₂ is within the these ranges, microparticles having a spherical shape of an appropriate size may be formed. When the flow rate is less than the above ranges, the sprayed products may re-agglomerate, resulting in an undesirable increase in the particle size. On the other hand, when the flow rate is greater than the above ranges, the particle size may become too small and there may be an issue with a large amount of fine particle generation.

The spray drying process may be performed at a temperature of about 120 °C to about 170 °C. Such a temperature range is sufficiently higher than a boiling point of the solvent. Thus, the silicon aggregate may be sufficiently dried through instantaneous volatilization.

The obtained silicon particle aggregate may be mixed with an amorphous carbon precursor. For example, a mixing ratio of the silicon particles and the amorphous carbon precursor may be a weight ratio of about 80:20 to about 20:80, or about 60:40 to about 50:50. The amorphous carbon precursor may include at least one of a polyimide resin, a furan resin, a phenolic resin, a polyvinyl alcohol resin, a poly (meth)acrylic acid resin, a polyurethane resin, a cellulose resin, an epoxy resin, a polystyrene resin, a petroleum-based pitch, a coal-based pitch, green coke, a mesophase pitch, a coal-based oil, a petroleum-based heavy oil, coke, or a combination thereof.

The obtained mixture may be compression molded. The compression molding process may be performed under such a pressure that a form of the silicon particle aggregate is maintained. For example, the compression molding process may be performed under a pressure of about 20 MPa to about 150 MPa. The silicon particle aggregate and the amorphous carbon precursor can be firmly attached to each other through the compression molding process. In addition, the amorphous carbon precursor may be inserted between the silicon particles, allowing the amorphous carbon precursor to fill the spaced intervals within the silicon particle aggregate. As a result, a compression molded product having a structurally stable form may be obtained.

The obtained compression molded product may be heat treated to make a negative electrode active material for a rechargeable lithium battery. The heat treatment process may be performed at a temperature of about 400 °C to about 1200 °C, or about 700 °C to about 1000 °C. In such temperature ranges, the sphericity of the negative electrode active material may be improved, and the amorphous carbon may be carbonized to improve a conductivity of the negative electrode active material and an initial efficiency of the battery. In addition, the heat treatment process may be performed in an N₂ atmosphere. Thus, the amorphous carbon precursor may be converted to amorphous carbon and be present in the negative electrode active material.

Referring again to FIG. 7, the negative electrode active material layer AML2 according to the embodiments of the present disclosure may further include a second negative electrode active material AM2. The second negative electrode active material AM2 may be a negative electrode active material that is different from the first anode active material AM1. In an example, the second negative electrode active material AM2 is a negative electrode active material including crystalline carbon or amorphous carbon. More specifically, the second negative electrode active material AM2 may include graphite such as non-shaped, plate-shaped, flake-shaped, sphere-shaped, or fiber-shaped natural graphite or artificial graphite. As still further examples, the second negative electrode active material AM2 may include soft carbon, hard carbon, mesophase pitch carbide, or calcined coke. A negative electrode active material layer AML2 that further includes the second negative electrode active material AM2 may have excellent in electrical conductivity and structural stability, thereby providing a negative electrode with stable performance.

According to an embodiment, when the negative electrode active material layer AML2 includes the first negative electrode active material AM1 and the second negative electrode active material AM2, an amount of the first positive electrode active material AM1 may be about 1 wt% to about 50 wt%, about 5 wt% to 40 wt%, or about 5 wt% to about 20 wt% relative to the total weight of the negative electrode active material layer AML2. An amount of the second negative electrode active material AM2 may be about 50 wt% to about 99 wt%, about 60 wt% to about 95 wt%, or about 80 wt% to about 95 wt% relative to the total weight of the negative electrode active material layer AML2. An amount of the second negative electrode active material AM2 may be greater than an amount of the first negative electrode active material AM1. When the amount of the first negative electrode active material AM1 is within these ranges, the capacity of the battery may be effectively improved.

### Separator 30

Depending on a type of the rechargeable lithium battery, the separator 30 may be present between positive electrode 10 and the negative electrode 20. The separator 30 may include one or more of polyethylene, polypropylene, and polyvinylidene fluoride, and may have a multi-layered separator thereof such as a polyethylene/polypropylene bi-layered separator, a polyethylene/polypropylene/polyethylene tri-layered separator, and a polypropylene/polyethylene/polypropylene tri-layered separator.

The separator 30 may include a porous substrate and a coating layer provided on one or opposite surfaces of the porous substrate. The coating layer may include an organic material, an inorganic material, or a combination thereof.

The porous substrate may be a polymer layer including one selected from polyolefin such as polyethylene and polypropylene, polyester such as polyethylene terephthalate and polybutylene terephthalate, polyacetal, polyamide, polyimide, polycarbonate, polyetherketone, polyaryletherketone, polyetherimide, polyamideimide, polybenzimidazole, polyethersulfone, polyphenyleneoxide, cyclic olefin copolymer, polyphenylenesulphide, polyethylene naphthalate, glass fiber, and polytetrafluoroethylene (e.g. Teflon^{™}), or may be a copolymer or mixture including two or more of the materials mentioned above.

The organic material may include a polyvinylidenefluoride-based copolymer or a (meth)acrylic copolymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, Boehmite, or a combination thereof. But the present disclosure is not limited to these examples.

The organic material and the inorganic material may be mixed in one coating layer or may be present as a stack of a coating layer including the organic material and a coating layer including an inorganic material.

### Electrolyte ELL

The electrolyte ELL for the rechargeable lithium battery may include a non-aqueous organic solvent and a lithium salt.

The non-aqueous organic solvent may serve as a medium for transmitting ions that participate in an electrochemical reaction of the battery. The non-aqueous organic solvent may include a carbonate-based solvent, an ester-based solvent, an ether-based solvent, a ketone-based solvent, an alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), or butylene carbonate (BC).

The ester-based solvent may include methyl acetate, ethyl acetate, n-propyl acetate, dimethyl acetate, methyl propionate, ethyl propionate, decanolide, mevalonolactone, valerolactone, or caprolactone.

The ether-based solvent may include dibutyl ether, tetraethylene glycol dimethyl ether (tetraglyme), bis(2-methoxyethyl) ether (diglyme), dimethoxyethane, 2-methyltetrahydrofuran, 2.5-dimethyltetrahydrofuran, or tetrahydrofuran. The ketone-based solvent may include cyclohexanone. The alcohol-based solvent may include ethyl alcohol or isopropyl alcohol, and the aprotic solvent may include nitriles such as R-CN (where R is a hydrocarbon group having a C2 to C20 linear, branched, or cyclic structure and may include a double bond, an aromatic ring, or an ether group); amides such as dimethylformamide; dioxolanes such as 1,3-dioxolane or 1.4-dioxolane; or sulfolanes.

The non-aqueous organic solvent may be used alone or in a mixture of two or more solvents.

In addition, when a carbonate-based solvent is used, a cyclic carbonate and a linear carbonate may be mixed and used, and the cyclic carbonate and the linear carbonate may be mixed in a volume ratio of about 1:1 to about 1:9.

The lithium salt may be a material that is dissolved in the non-aqueous organic solvent to serve as a supply source of lithium ions in a battery. The lithium salt enables a basic operation of the rechargeable lithium battery by promoting the movement of lithium ions between positive and negative electrodes. The lithium salt may include, for example, at least one of LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (where x and y are integers of 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), and lithium bis(oxalato)borate (LiBOB).

As described above, the rechargeable lithium battery of one embodiment may include the separator 30 and the electrolyte ELL. But, in other embodiments, the separator 30 and/or the electrolyte ELL may be omitted. For example, a rechargeable lithium battery according to the present disclosure may be an all-solid-state battery including a solid electrolyte.

Hereinafter, specific examples according to the present disclosure will be described. It should be noted that the examples are merely exemplarily and the scope of the present disclosure is not limited to these examples.

### Example 1

### Preparation of Silicon Nanoparticles

A kaolin (Al₂Si₂O₅(OH)₄) mineral was prepared as a starting material, and the mineral was etched to produce silicon nanoparticles. The etching process was performed by immersing the mineral in hydrochloric acid. After the etching process, silicon nanoparticles having a pipe-shaped structure including through holes were prepared by a magnesium thermal reduction. The prepared silicon nanoparticles had a first diameter D1 of about 20 nm, and a first thickness T1 of about 10 nm. In addition, the first length L1 / first diameter D1 of the prepared silicon nanoparticles was about 3 to about 30.

### Preparation of Negative Electrode Active Material

The prepared silicon nanoparticles were added to an isopropyl alcohol solvent to prepare a dispersion having a concentration of 15 wt%.

The prepared silicon dispersion was spray dried using a two-fluid nozzle at a temperature of about 120 °C, while providing N₂ at a flow rate of about 50 L/min. The silicon nanoparticles aggregated to form silicon aggregate.

40 wt% of the silicon aggregate and 60 wt % of petroleum-based pitch were mixed, and the mixture was compression molded under a pressure of about 20 MPa for about 3 minutes.

The obtained compression molded product was heat treated at about 1000 °C in an N₂ atmosphere to prepare a first negative electrode active material.

The first negative electrode active material included soft carbon amorphous carbon that filled internal voids and an outer surface of the silicon aggregate. An amount of amorphous carbon was about 60 wt% relative to the total weight of the first negative electrode active material, and an amount of silicon was about 40 wt% relative to the total weight of the first negative electrode active material.

The first negative electrode active material and a natural graphite second negative electrode active material were mixed at a weight ratio of about 15:85 and used as a negative electrode active material. A styrene-butadiene rubber was used as a binder. 98 wt% of the negative electrode active material, 1 wt% of the binder, and 1 wt% of a carboxymethyl cellulose as an agent for increasing viscosity were mixed in a water solvent to prepare a negative electrode active material slurry. The prepared negative electrode active material slurry was coated on a Cu current collector, dried, and rolled to form a negative electrode active material layer.

A half-cell with a capacity of 500 mAh/g was made using the negative electrode, a lithium metal counter electrode, and an electrolyte. As the electrolyte, a 1.5 M LiPF₆ solution in a mixed solvent of ethylene carbonate (EC), dimethyl carbonate (DMC), and ethyl methyl carbonate (EMC) (20:40:40 volume ratio) was used.

### Comparative Example 1

A composite negative electrode material of silicon and carbon was prepared in the same manner as Example 1 but using Si particles with a size of 500 nm that were different from, and as an alternative to, the silicon nanoparticles in the form of pipe-shaped used in the above example. An amount of amorphous carbon was 60 wt% and an amount of silicon was 40 wt% relative to the total weight of the first negative electrode active material.

The prepared silicon-carbon composite negative electrode material was used as the first negative electrode active material, and natural graphite was again used as a second negative electrode active material. The first negative electrode active material and the second negative electrode active material were mixed at a weight ratio of about 15:85 and used as a negative electrode active material. A negative electrode and half-cell were made in the same manner as in Example 1, except that the negative electrode active material of this Comparative Example 1 was used.

The above-described Example 1 and Comparative Example 1 are summarized in Table 1 below.

**Table 1**

| | Negative Electrode Active Material | |
|---|---|---|
| | First Negative Electrode Active Material | Second Negative Electrode Active Material |
| Example (Pipe-Shaped Nano Si) | Silicon-carbon composite | Natural graphite |
| | 15 wt % | 85 wt% |
| | (Si : C = 40 : 60) | |
| Comparative Example | Silicon-carbon composite | Natural graphite |
| (Particle-Shaped Nano Si) | 15 wt% | 85 wt% |
| | (Si : C = 40 : 60) | |

### Evaluation Example 1: SEM Measurement

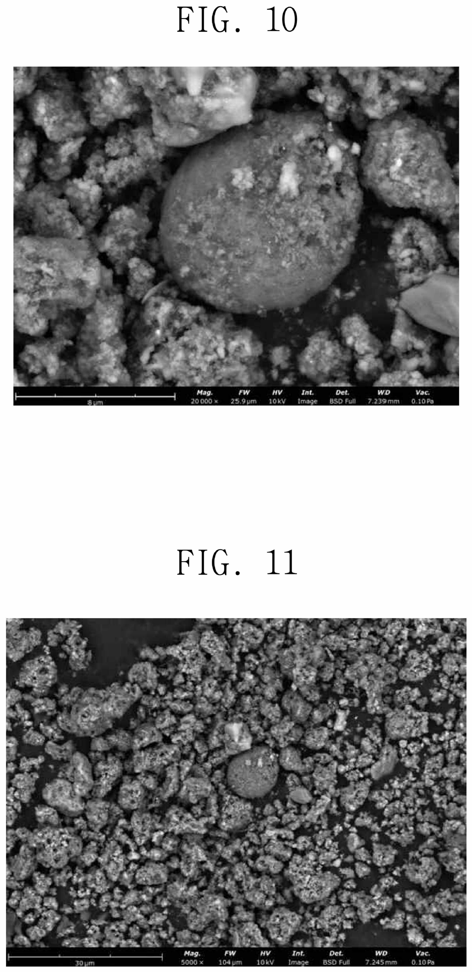

SEM images of the first negative electrode active material prepared in the above example are shown in FIGS. 10 and 11. FIG. 10 is an image enlarged 20,000 times, and FIG. 11 is an image enlarged 5,000 times. Referring to the figures, no silicon nanoparticles are observed on the SEM image. This is because the nano-sized silicon nanoparticles are present inside a matrix structure formed by carbon-based material. In particular, the silicon nanoparticles form a composite with the carbon-based material, meaning that they exist as an independent composite.

### Evaluation Example 2: Evaluation of Cycle-Life Characteristics

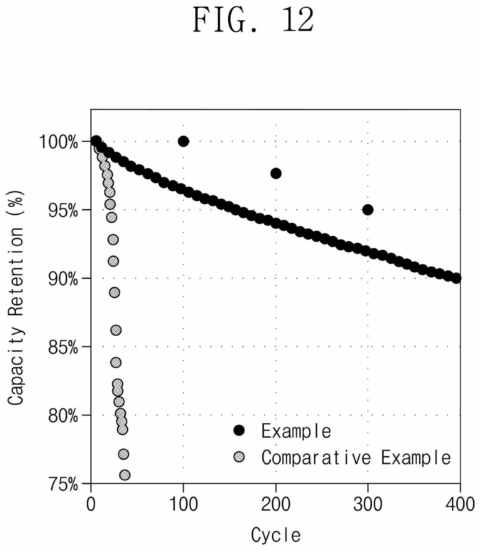

Coin full-cell batteries according to Example 1 and Comparative Example 1 were charged and discharged up to about 400 times at 1 C. The results are shown in FIG. 12. Referring to FIG. 12, the lifespan of the battery of Comparative Example 1 dropped sharply at 50 cycles. On the other hand, the battery of Example 1 had excellent life characteristics up to 400 cycles. In particular, 90% of the capacity of Example 1 was maintained even after 400 cycles. This result is largely influenced by the structural form of the silicon nanoparticles. Unlike Comparative Example 1 where the silicon nanoparticles were a dense structure, the particles in Example 1 had a pipe-like shape with internal voids, which allow for the expansion of the silicon to be absorbed.

It can be seen that in Example 1 the volume change is suppressed and a stable negative electrode active material is provided due to the structural characteristics of the silicon nanoparticles. This, it is possible to increase an amount of silicon in the negative electrode active material while enhancing stability, thereby providing a battery with high capacity and long lifespan.

A negative electrode active material according to embodiments of the present disclosure may alleviate structural deformation due to volume expansion of silicon and suppress side reactions with an electrolyte. Thus, a negative electrode active material according to the present disclosure can improve the battery performance.

While the present disclosure has been described with reference to preferred embodiments, it should be understood that the embodiments are provided for illustrative purposes only and do not limit the scope of the present disclosure. Various modifications and equivalent arrangements may be made without departing from the scope of the present disclosure. Accordingly, the described embodiments should be regarded as examples rather than limitations of the present disclosure.

Embodiments are set out in the following clauses:
Clause 1. A negative electrode comprising: a current collector; and a negative electrode active material layer on the current collector, wherein the negative electrode active material layer comprises a negative electrode active material as hereinbefore described and as claimed in the accompanying claims.
Clause 2. The negative electrode of Clause 1, wherein the negative electrode active material layer further comprises a conductive material and a binder.
Clause 3. The negative electrode of Clause 1 or Clause 2, wherein an amount of the first negative electrode active material is about 5 wt% to about 40 wt% relative to a total weight of the negative electrode active material layer.
Clause 4. The negative electrode of any one of Clauses 1 to 3, wherein the negative electrode active material layer is a first negative electrode active material layer, wherein the negative electrode active material layer further comprises a second negative electrode active material that is different from the first negative electrode active material, and wherein the second negative electrode active material comprises crystalline carbon.
Clause 5. The negative electrode of Clause 4, wherein an amount of the second negative electrode active material is greater than an amount of the first negative electrode active material.
Clause 6. A rechargeable lithium battery comprising: a negative electrode according to any one of Clauses 1 to 5; and a positive electrode.

## Claims

1. A negative electrode active material comprising:
a composite including a carbon-based material and silicon nanoparticles,
wherein each of the silicon nanoparticles is a pipe-shaped structure extending in a direction by a length,
wherein a wall portion of each of the silicon nanoparticles comprises an inner wall forming a through hole having a diameter, and
wherein the wall portion has a thickness from the inner wall to an outer wall.

2. The negative electrode active material as claimed in claim 1, wherein the diameters of the silicon nanoparticles are about 1 nm to about 100 nm.

3. The negative electrode active material as claimed in claim 1 or claim 2, wherein the thicknesses of the silicon nanoparticles are about 1 nm to about 100 nm.

4. The negative electrode active material as claimed in any preceding claim, wherein a ratio of the diameters of the silicon nanoparticles to the thicknesses of the silicon nanoparticles is about 1 to about 100.

5. The negative electrode active material as claimed in any preceding claim, wherein the lengths of the silicon nanoparticles are about 0.5 µm to about 200 µm.

6. The negative electrode active material as claimed in any preceding claim, wherein a ratio of the lengths of the silicon nanoparticles to the diameters of the silicon nanoparticles are about 5 to about 5000.

7. The negative electrode active material as claimed in any preceding claim, wherein the carbon-based material surrounds the wall portions of the silicon nanoparticles.

8. The negative electrode active material as claimed in any preceding claim, wherein the composite comprises:
a matrix including the carbon-based material; and
the silicon nanoparticles in the matrix.

9. The negative electrode active material as claimed in any preceding claim, wherein an amount of the carbon-based material is about 30 wt% to about 70 wt% relative to a total weight of the composite.

10. The negative electrode active material as claimed in any preceding claim, wherein an amount of the silicon nanoparticles is about 30 wt% to about 70 wt% relative to a total weight of the composite.

11. The negative electrode active material as claimed in any preceding claim, wherein the carbon-based material comprises amorphous carbon, and
wherein the amorphous carbon comprises at least one of soft carbon, hard carbon, mesophase pitch carbide, calcined coke, or a combination thereof.

12. The negative electrode active material as claimed in any preceding claim, wherein the composite further comprises crystalline carbon, and/or
wherein the composite further comprises a coating layer that includes amorphous carbon.

13. The negative electrode active material as claimed in any preceding claim, wherein an average particle diameter of the composite is about 2 µm to about *15* µm.

14. A negative electrode comprising:
a current collector; and
a negative electrode active material layer on the current collector,
wherein the negative electrode active material layer comprises a negative electrode active material according to any one of claims 1 to 13.

15. The negative electrode as claimed in claim 14, wherein the negative electrode active material layer is a first negative electrode active material layer,
wherein the negative electrode active material layer further comprises a second negative electrode active material that is different from the first negative electrode active material,
wherein the second negative electrode active material comprises crystalline carbon.
